Europäisches Patentamt

European Patent Office

Office européen des brevets

(19)

(11) Numéro de publication: **0 270 405 B1**

## FASCICULE DE BREVET EUROPEEN

(12)

(45) Date de publication de fascicule du brevet:
**28.08.91**

(51) Int. Cl.⁵: **H04N 7/133, H04N 7/13**

(21) Numéro de dépôt: **87402432.6**

(22) Date de dépôt: **28.10.87**

(54) **Procédé et dispositif de réduction du bruit engendré par un codeur-décodeur d'images numériques opérant par blocs.**

(30) Priorité: **31.10.86 FR 8615242**

(43) Date de publication de la demande:
**08.06.88 Bulletin 88/23**

(45) Mention de la délivrance du brevet:
**28.08.91 Bulletin 91/35**

(84) Etats contractants désignés:
**AT BE CH DE ES GB IT LI LU NL SE**

(56) Documents cités:
**FR-A- 2 329 124**

**ICASSP 83 PROCEEDINGS ON THE IEEE IN-TERNATIONAL CONFERENCE ON ACOUS-TICS, SPEECH AND SIGNAL PROCESSING, Boston, Massachusetts, 14-16 avril 1983, vol. 3 des 3, pages 1212-1215, IEEE, H.C. REEVE III et al.: "Reduction of blocking effect in image coding"**

**IEEE INTERNATIONAL CONFERENCE ON COMMUNICATIONS, Philadelphia, Conference Record, 13-17 juin 1982, vol. 2 des 3, ICC'82 The Digital Revolution, pages 4H.3.1-4H.3.6, IEEE; R.C. REININGER et al.:**

**"Soft decision demodulation and transform coding of images**

**INTERNATIONAL CONFERENCE ON COMMU-NICATIONS, ICC'80 CONFERENCE RECORD, Seattle, WA., 8-12 juin 1980, vol. 2 des 3, pages 31.7.1-37.7.5; KING NGI GNAN et al.: "Lowpass filtering in the cosine transform domain"**

(73) Titulaire: **THOMSON GRAND PUBLIC**
**74, rue du Surmelin**
**F-75020 Paris(FR)**

(72) Inventeur: **Thoreau, Dominique**
**THOMSON-CSF SCPI 19, avenue de Messine**
**F-75008 Paris(FR)**

(74) Mandataire: **Turlèque, Clotilde et al**
**THOMSON-CSF SCPI**
**F-92045 PARIS LA DEFENSE CEDEX 67(FR)**

## Description

La présente invention se rapporte au traitement des images numérisées et plus particulièrement aux systèmes destinés à réduire le débit des informations numériques nécessaires pour le stockage ou la transmission de ces images.

Le codage à bas débit des images numériques couleurs nécessite un taux de réduction élevé de l'information: par exemple si un débit de 10 M bits par seconde est visé, pour une source d'image numérique débitant à 140 M bits par seconde, le taux de réduction de l'information est alors de 14.

Il est connu d'utiliser un codeur-décodeur effectuant une transformation orthogonale pour obtenir de tels taux de compression. Mais une telle compression engendre dans certaines circonstances des défauts sur les images.

Ces défauts peuvent être les suivants:
- les frontières des blocs deviennent visibles dans les zones uniformes de l'image;
- des oscillations visibles se produisent sur les transitions fortes et isolées;
- des défauts de restitution des informations deviennent également visibles dans les zones sombres de l'image.

Il est connu du document : ICASSP 83, Proceedings on the IEEE International Conference on Acoustics, Speech and Signal Processing, Boston, Massachusetts, 14-16 avril 1983, vol.3, pages 1212-1215, H.C. Reeve III et al.:, "Reduction of Blocking effect in image coding" d'utiliser, pour remédier à ces défauts, un procédé de filtrage des blocs images décodés indépendant du codage utilisé.

L'invention a pour objet un procédé et le dispositif correspondant, pour la réduction de ces défauts réalisant un filtrage des blocs d'images, adapté aux conditions du codage.

Suivant l'invention un procédé de réduction du bruit engendré par un codage-décodage d'images numériques opérant par blocs de points d'image, est caractérisé en ce qu'il consiste à traiter la valeur caractéristique du point courant des blocs décodés :
- en déterminant, à partir d'une fenêtre centrée sur le point courant de l'image une valeur caractéristique moyenne, Moy,
- puis en déterminant à partir d'un paramètre, NR, lié à l'état de fonctionnement du codeur et de cette moyenne, Moy, un paramètre de filtrage, p,
- et en déterminant une valeur filtrée, y(i,j), pour le point courant à partir de sa valeur caractéristique décodée, x(i,j), du paramètre de filtrage, p, et de la moyenne dans la fenêtre, Moy: $y(i,j) = p.x(i,j) + (1-p).Moy$.

L'invention a également pour objet un dispositif de réduction du bruit engendré par un codeur-décodeur, opérant par blocs de points d'images numérisées de N lignes par M colonnes, ayant une entrée (E) reliée à la sortie du décodeur et destiné à la mise en oeuvre du procédé selon l'une quelconque des revendications 1 à 5, est caractérisé en ce que
- cette entrée (E) est reliée à l'entrée d'une mémoire de lignes de capacité égale à 2M valeurs, à l'entrée d'une mémoire de colonnes de capacité égale à deux colonnes du $2(N+2)$ valeurs et à l'entrée d'une mémoire de travail de capacité égale à $(N+2)(M+2)$ valeurs, cette mémoire étant également reliée aux mémoires de lignes et de colonnes,
- le dispositif comportant en outre un circuit de calcul de moyenne à partir des valeurs associées aux points d'une fenêtre mises en mémoire dans la mémoire
- un circuit de détermination du paramètre de filtrage, p, couplé d'une part à la sortie du calcul de moyenne, d'autre part à une entrée de données caractéristiques de l'état de fonctionnement du codeur,
- et un circuit de filtrage relié d'une part à la sortie du circuit de calcul de moyenne, d'autre part à la sortie du circuit de détermination du paramètre de filtrage, et dont la sortie fournit la suite des valeurs caractéristiques filtrées.

L'invention sera mieux comprise et d'autres caractéristiques apparaîtront à l'aide de la description qui suit en référence aux figures annexées.
- La figure 1 illustre les variations du paramètre de filtrage en fonction de la moyenne dans la fenêtre de filtrage;
- La figure 2 illustre le balayage de l'image, par blocs;
- Les figures 3 et 4 illustrent le déplacement de la fenêtre de filtrage dans un bloc balayé respectivement de droite à gauche, et de gauche à droite;
- La figure 5 est un schéma synoptique du dispositif de réduction de bruit selon l'invention.
- La figure 6 illustre le séquencement de la gestion des mémoires 10, 20 et 30 de la figure 5.

Le codage, après transformation orthogonale des blocs d'images revient très succinctement à sélectionner, en vue de les stocker ou de les transmettre, une partie plus ou moins importante des composantes spectrales de chacun des blocs transformés selon le nombre des composantes résultant de la transformation. Le nombre de composantes retenu est fonction de l'état de fonctionnement du codeur c'est-à-dire de la régulation de débit. En effet, l'organe destiné à réguler le débit contient une mémoire tampon qui peut alternativement soit se vider soit au contraire se remplir. Si la mémoire tampon vient à trop se remplir, il est alors nécessaire de réduire le nombre de composantes codées pour abaisser le niveau de remplissage de la mémoire. A tout instant le remplissage de la mémoire tampon peut être quantifié par une variable d'état, soit NR, caractéristique de "l'état de fonctionnement" du codeur-décodeur. Lorsque la mémoire tampon est faiblement remplie NR est de faible valeur et toutes les composantes résultant de la transformation orthogonale peuvent être transmises, alors que lorsque la mémoire tampon est engorgée NR a une valeur élevée et le nombre de composantes transmises doit être réduit, par régulation.

L'organe de régulation décide donc à tout instant du nombre de composantes à coder dans chacun des blocs; or le nombre de composantes qui serait nécessaire à une bonne restitution du bloc est fonction de l'information initialement contenue dans ce bloc, ce dont l'organe de régulation ne tient pas compte. Cet état de fait est la principale source des défauts provoqués par le codeur-décodeur sur les images restituées.

Selon l'invention, la réduction de ces défauts est obtenue par un filtrage adaptatif des blocs de l'image. Ce filtrage tient compte d'une part de la valeur de luminance moyenne locale, et d'autre part du paramètre de régulation NR. De plus, pour remédier aux défauts de restitution de l'information dans les zones sombres de l'image, il est important de conserver la possibilité de coder les détails fins dans ces zones sombres lorsque la valeur du paramètre de régulation le permet.

La description précise ci-après du procédé de réduction du bruit selon l'invention, est donnée pour le filtrage de la luminance où les défauts sont les plus sensibles; mais cette description n'est pas limitative et le même procédé pourrait également être appliqué aux composantes de chrominance.

Soit $x(i,j)$ la valeur de la luminance d'un point de l'image numérisée restituée par le décodeur d'un système codeur-décodeur de signal de télévision opérant par blocs, non filtré, c'est-à-dire avant le traitement suivant l'invention.

Soit $y(i,j)$ la valeur de luminance du pixel de l'image filtré selon l'invention.

Soit Moy la moyenne des niveaux de luminance des pixels se trouvant dans un voisinage centré sur le pixel de la ligne i et de la colonne j. Cette fenêtre peut être de dimension $3 \times 3$ comme définie ci-dessous:

| $x(i-1,j-1)$ | $x(i-1,j)$ | $x(i-1,j+1)$ |
|---|---|---|
| $x(i,j-1)$ | $x(i,j)$ | $x(i,j+1)$ |
| $x(i-1,j-1)$ | $x(i+1,j)$ | $x(i+1,j+1)$ |

Dans ce cas la moyenne de la luminance dans cette fenêtre est:

$$\text{Moy} - 1/9 \; \Sigma \; x(i+k,j+l)$$

pour $k = \{-1, 0, +1\}$
et $l = \{-1, 0, +1\}$

Avec p, paramètre de filtrage déterminé comme indiqué ci-après, le filtrage utilisé selon l'invention est de la forme:

$$y(i,j) = p.x(i,j) + (1-p).\text{Moy}.$$

La formule montre que si $p = 1$, alors $y(i,j) = x(i,j)$ la valeur de la luminance décodée est transmise telle quelle. Par contre, si $p = 0$, alors $y(i,j) = \text{Moy}$: la valeur filtrée ne dépend plus de la valeur décodée de la luminance du pixel que par la moyenne dans la fenêtre.

Cette valeur de p est choisie en fonction d'une part de la valeur moyenne dans la fenêtre, Moy, et d'autre part du paramètre de régulation NR. La fonction de deux variables NR et Moy à partir de laquelle est déterminée la valeur de p utilisée pour le filtrage est liée à l'aspect psycho-visuel des images. A titre d'exemple, il a été montré qu'une fonction du type

$$p = (1 + (\sqrt{2}-1).(\text{Log}(NR + 1)a/\text{Moy})^b)^{-2}$$

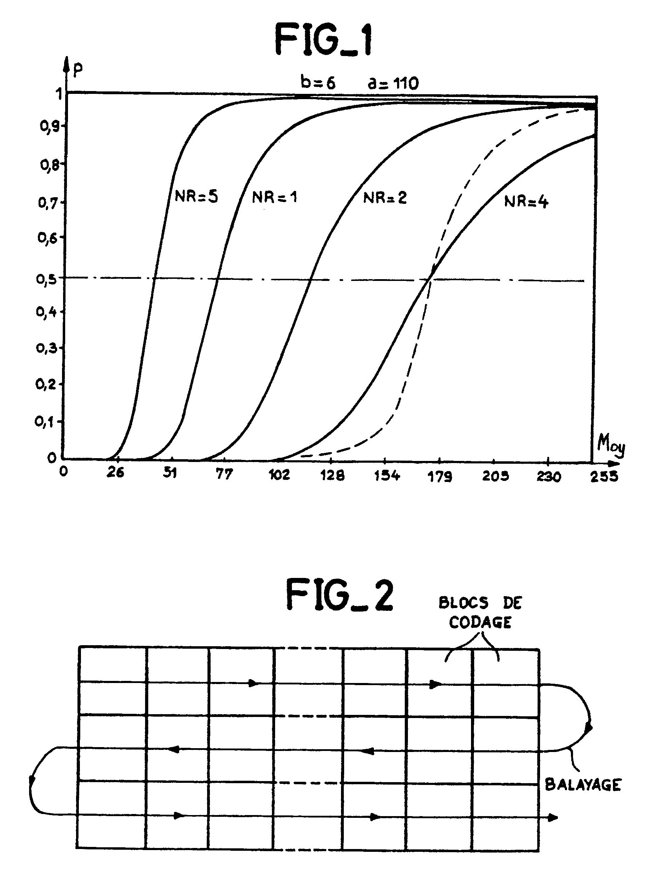

donnait de bons résultats. a et b sont des constantes de valeurs empiriques déterminées comme indiqué ci-dessus en fonction de l'aspect psycho-visuel des images après traitement. A titre d'exemple a peut être égal à 110 et b égal à 6. Selon les valeurs de NR et Moy, différentes valeurs de p sont obtenues. La figure 1 représente la variation de p en fonction de la valeur moyenne dans la fenêtre, Moy, suivant différentes valeurs de NR, et avec les valeurs de constante indiquées ci-dessus: b = 6 et a = 110. La valeur de la constante b influe sur la pente de la courbe p = f(NR,Moy), tandis que la constante a détermine pour une valeur RN donnée la valeur de Moy pour laquelle p = 0,5. Cette courbe montre que pour une valeur donnée de la moyenne locale, Moy, la valeur p diminue lorsque la variable d'état NR augmente. C'était le but recherché, c'est-à-dire de diminuer l'influence des transitions par un filtrage plus important lorsque la mémoire tampon est saturée.

En fait dans le cadre d'une réalisation, la valeur de la variable de régulation NR doit être quantifiée de façon à utiliser différentes caractéristiques p(Moy), c'est-à-dire différentes mémoires programmées accessibles par la valeur de la moyenne pour une valeur de la variable d'état donnée. Il est possible par exemple de quantifier la variable de régulation NR suivant neuf niveaux: 0, 0.5, 1, 2, 3, 4, 5, 7, 10. Le dispositif comporte alors 9 PROM accessibles selon les différentes valeurs de la moyenne, l'adresse de la PROM, NPROM, étant obtenue par une table de transcodage par exemple :

| NR | O | 0.5 | 1 | 2 | 3 | 4 | 5 | 7 | 10 |
|-------|---|-----|---|---|---|---|---|---|----|
| NPROM | 1 | 2 | 3 | 4 | 5 | 6 | 7 | 8 | 9 |

Le filtrage est effectué de la manière suivante: comme la transformation orthogonale réalise le traitement par blocs, l'image étant subdivisée en blocs de codage considérés indépendamment les uns des autres pour cette transformation orthogonale, le filtrage selon l'invention est réalisé par trame de telle sorte que l'analyse soit faite selon des bandes de hauteur égale à celle du bloc et de longueur égale à la longueur d'une ligne, le dernier bloc de la ligne étant immédiatement suivi pour le filtrage, de l'analyse du bloc de la bande suivante immédiatement en-dessous c'est-à-dire que l'on change de sens de balayage d'une bande à la suivante. La figure 2 illustre l'ordre dans lequel les blocs de codage sont analysés pour le filtrage : les blocs des bandes de rangs impairs sont analysés de gauche à droite et les blocs des bandes de rangs pairs sont analysés de droite à gauche.

Pour effacer, dans la mesure du possible, les frontières entre les blocs de codage, il est nécessaire de tenir compte des valeurs décodées attribuées aux pixels des blocs voisins. Typiquement, pour une analyse suivant une fenêtre 3×3 on tiendra compte des pixels des deux dernières lignes du bloc de même rang de la bande précédente et des deux dernières colonnes (dans le sens du balayage du bloc courant) précédant de la même bande, ainsi que des valeurs des 4 pixels jouxtant ces deux lignes et ces deux colonnes, dans le bloc précédant de la bande précédente, ou "bloc diagonal".

Comme indiqué ci-dessus, dans chaque bloc, le filtrage est réalisé à partir d'une fenêtre glissante de dimension 3×3 par exemple. Il est donc nécessaire de disposer, en plus d'une mémoire pour le bloc courant à filtrer, d'une mémoire de lignes, et d'une mémoire de colonnes soit de droite soit de gauche suivant le sens du balayage dans la bande.

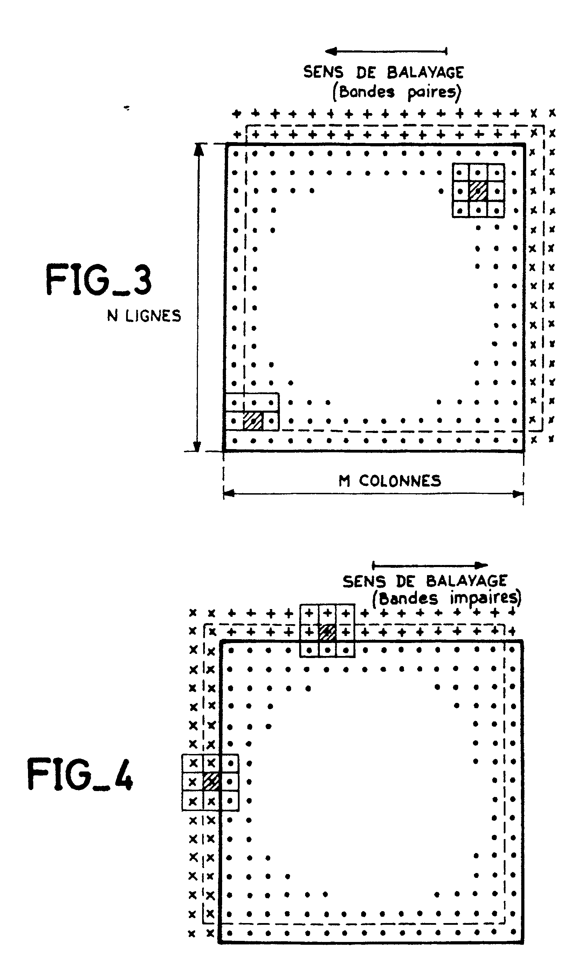

Les points nécessaires au traitement selon l'invention pour un codage par blocs de 16×16 pixels sont marqués sur les figures 3 et 4 respectivement avec un sens d'analyse de l'image par blocs de droite à gauche sur la figure 3 et de gauche à droite sur la figure 4. Sur les figures 3 et 4 les pixels marqués d'un point sont ceux qui appartiennent au bloc courant, ceux marqués d'un " + " sont les points mis en mémoire dans les mémoires de lignes, et ceux marqués d'un "x" sont les points appartenant à la mémoire de colonnes. Le trait continu marque la limite d'un bloc courant. Les valeurs mises en mémoire dans les mémoires de lignes sont issus des deux dernières lignes du bloc supérieur au bloc courant ; les points marqués d'un "x" viennent d'une part du bloc adjacent de la même bande précédemment codée, et d'autre part du bloc de la bande précédente et de rang inférieur, c'est-à-dire du bloc de la diagonale supérieure droite ou gauche selon le sens de l'analyse de la trame. Au fur et à mesure que la fenêtre de filtrage se déplace, les différents points du bloc sont filtrés. A titre d'exemple on a représenté sur chacune des figures 3 et 4 la fenêtre de filtrage à deux moments particuliers, le point central de la fenêtre de filtrage est le point filtré à l'instant où la fenêtre est dans cette position. Il est repéré par des hachures.

Avec les conventions indiquées ci-dessus le bloc filtré ne coïncide pas exactement avec les blocs de codage : les limites du bloc filtré sont marquées en pointillés sur les figures 3 et 4. Il est possible de modifier légèrement le procédé de traitement indiqué ci-dessus pour faire coïncider le bloc filtré et le bloc de codage. Pour cela, le bloc traité étant de dimension 18 points × 18 points pour un bloc de codage de dimension 16×16, le traitement est alors réalisé de la manière suivante:

$$y(i,j) = x(i+1,j+1).p + (1-p).Moy$$

cette formule est valable pour les blocs appartenant aux bandes de gauche à droite. Pour les bandes balayées de droite à gauche la formule est la suivante:

$$y(i,j) = x(i-1,j-1).p + (1-p).Moy$$

ainsi le bloc 16 points × 16 points filtré possède son premier point supérieur gauche dans la ligne de rang i et la colonne de rang j égal 1.

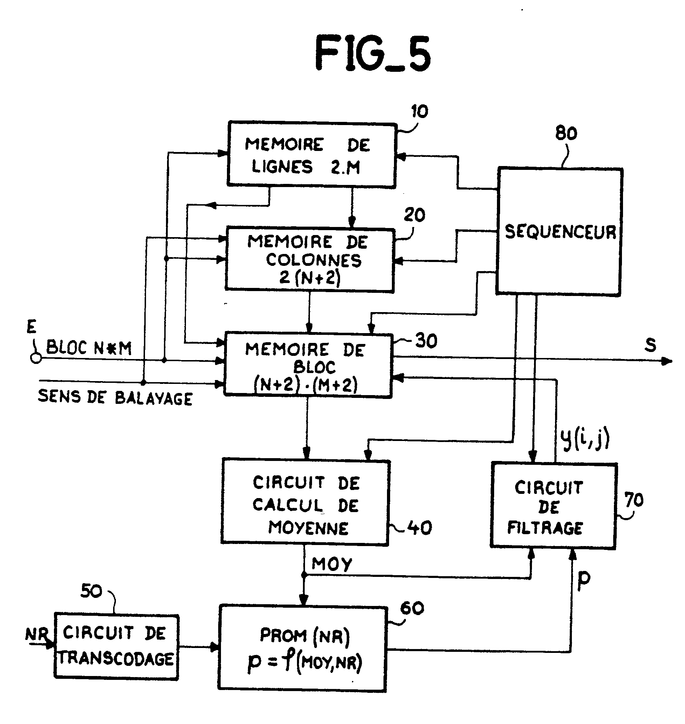

La figure 5 est un schéma synoptique du dispositif de réduction de bruit selon l'invention.

Il comporte une entrée de données E recevant la suite des données du bloc décodé, de dimensions N lignes et M colonnes. Cette entrée est reliée d'une part à une mémoire de lignes 10 destinée à la mise en mémoire des deux lignes inférieures des blocs décodés ; cette mémoire a une capacité de 2 lignes d'image. L'entrée de données E est également reliée à l'entrée d'une mémoire de colonnes 20 destinée à la mise en mémoire pour chaque bloc décodé des deux dernières colonnes du bloc précédent de la même bande et des 4 points du coin du bloc diagonal comme indiqué ci-dessus; cette mémoire a une capacité de $2(N+2)$. Le dispositif comporte en outre une mémoire de travail, 30, de capacité $(N+2).(M+2)$ points, destinée à recevoir d'une part les points du bloc courant c'est-à-dire les N×M points et d'autre part les points mis en mémoire dans la mémoire de lignes 10 et dans la mémoire de colonnes 20. Pour cela la mémoire de bloc 30 a trois entrées respectivement reliées à la sortie de la mémoire de lignes 10, à la sortie de la mémoire de colonnes 20 et à l'entrée de données E. Elle a également une entrée où lui est appliqué un signal indiquant le sens de balayage, et une autre entrée destinée à fournir les valeurs filtrées correspondant aux différents points qui s'inscriront au fur et à mesure à la place des valeurs initiales.

Pour le filtrage, la mémoire de bloc 30 a une sortie reliée à l'entrée d'un circuit de calcul de moyenne 40 dans une fenêtre glissante, 3×3 (par exemple), ce circuit calculant la valeur moyenne Moy à partir des valeurs dans chaque fenêtre. Cette valeur moyenne Moy est appliquée à l'entrée d'une mémoire PROM 60 qui contient pour les différentes valeurs possibles de NR, une suite de valeurs associées aux différentes valeurs possibles de la moyenne. Pour cela la variable NR est appliquée à l'entrée d'un circuit de transcodage 50 qui la quantifie. La valeur quantifiée constitue une partie de l'adresse de la mémoire PROM 60, l'autre partie de l'adresse étant la valeur de la moyenne Moy. En fonction du paramètre de régulation quantifié NR et de la moyenne, la mémoire PROM 60 délivre la valeur du paramètre p qui va être ensuite utilisée pour le filtrage. Cette valeur de p est appliquée à une entrée d'un circuit de filtrage 70, dont une autre entrée est reliée à la sortie du circuit de calcul de moyenne 40, et qui calcule la valeur filtrée pour le point courant, $y(i,j)$. Cette valeur filtrée est appliquée à la mémoire de bloc 30 où elle remplace la valeur décodée initiale à un décalage près. La mémoire de bloc 30 a une sortie de données S qui fournit la suite des valeurs filtrées.

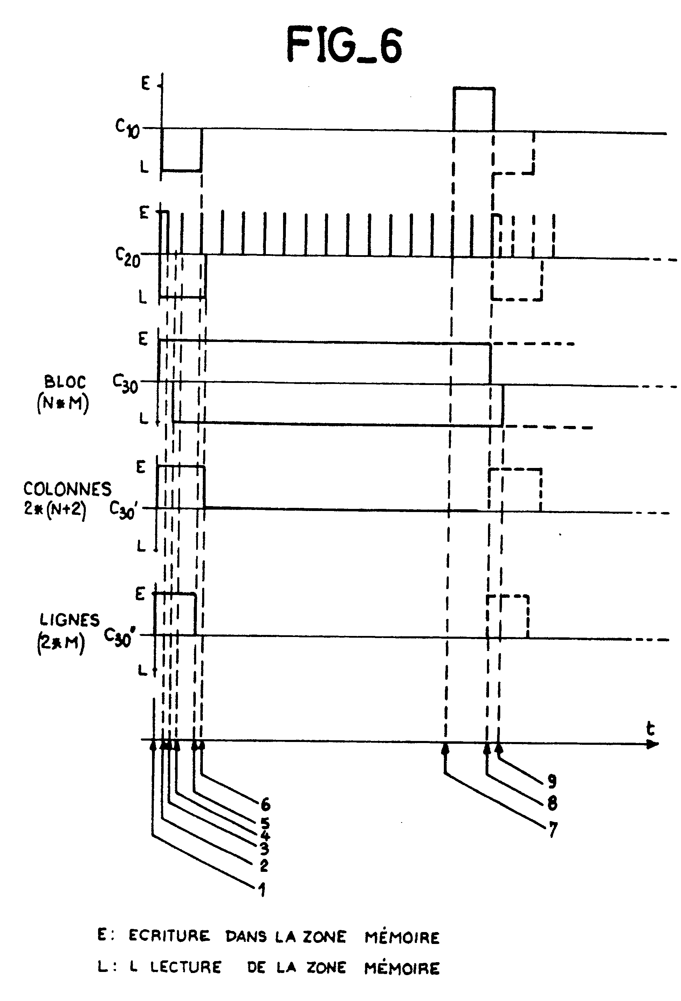

Les différents circuits décrits ci-dessus sont commandés par un circuit séquenceur 80. Ce séquenceur réalise en particulier la gestion des mémoires 10, 20 et 30 de la figure 5 illustrée par les chronogrammes de la figure 6.

Sur cette figure on désigne par E les instants durant lesquels on écrit dans une mémoire, et par L les instants auxquels on lit les mémoires. $C_{10}$ est le chronogramme des actions de lecture et d'écriture dans la mémoire 10 des deux lignes supérieures, $C_{20}$ est le chronogramme des actions de lecture et d'écriture dans la mémoire 20 des deux colonnes latérales précédentes plus les 4 points appartenant au bloc diagonal supérieur (gauche ou droit selon les balayages des blocs).

L'écriture dans la mémoire de bloc 30 est traitée en trois phases relatives :
- au bloc principal de taille N × M, $C_{30}$
- aux colonnes latérales $C_{30'}$
- aux 2 lignes supérieures $C_{30''}$

Les phases clefs du traitement sont notées t1 à t9 sur le chronogramme inférieur de la figure 6. Ces différentes phases sont les suivantes :
- à l'instant t1 :
  - écriture des premiers points du bloc décodé dans la mémoire 30
  - écriture des points des lignes supérieures dans la mémoire 30 ($C_{30'}$), donc la lecture de la mémoire 20
- écriture des points des colonnes dans la mémoire 30 ($C_{30''}$), donc lecture de la mémoire 20
- écriture dans la mémoire 20 des 4 points diagonaux supérieurs pris dans la mémoire 10 (pour le traitement du bloc suivant) ;
- à t2 : fin d'écriture des points diagonaux dans la mémoire 20;
- à t3 : début de filtrage puis début de la lecture de la zone mémoire 30 (points filtrés) ;
- à t4 : écriture dans la mémoire 20 des 2 points de fin de lignes du bloc correspondant aux points de colonne destinés au bloc suivant et cela autant de fois qu'il y a de lignes dans le bloc ;
- à t5 : fin de la lecture des points de lignes supérieures dans la mémoire 10 et fin d'écriture dans la mémoire 30 ($C_{30''}$) ;
- à t6: fin de la lecture des points des colonnes dans la mémoire 20 et écriture dans la mémoire 30 ($C_{30'}$) ;
- à t7 : arrivé aux 2 dernières lignes du bloc, on mémorise celles-ci dans la mémoire 10, en même temps que dans la mémoire 30 ;
- à t8 qui marque la fin du bloc courant en écriture dans la mémoire 30, toutes les procédures présentées lors de t1 recommencent (pointillés) ;
- à t9 : fin de traitement du bloc courant.

L'invention n'est pas limitée aux modes de réalisation précédemment décrits ni aux valeurs numériques données à titre d'exemple. En particulier la fenêtre à partir de laquelle est calculée la moyenne peut être plus grande et par exemple comporter 5×5 points le point courant étant le point central de cette fenêtre. Par ailleurs la disposition qui consiste à quantifier les valeurs du paramètre de régulation NR pour permettre de trouver, à partir de la valeur de la moyenne et de ce paramètre de régulation quantifié, la valeur du paramètre p n'est pas limitative. Tout dispositif qui permettrait de déterminer un paramètre p à partir de ces deux valeurs est utilisable.

L'invention s'applique notamment à la restitution d'images dans les magnétoscopes numériques.

## Revendications

1. Procédé de réduction du bruit engendré par un codage-décodage d'images numériques opérant par blocs de points d'image, caractérisé en ce qu'il consiste à traiter la valeur caractéristique du point courant des blocs décodés :
   - en déterminant, à partir d'une fenêtre centrée sur le point courant de l'image, une valeur caractéristique moyenne, Moy, des valeurs associées aux points de cette fenêtre,
   - puis en déterminant à partir d'un paramètre, NR, lié à l'état de fonctionnement du codeur et de cette moyenne, Moy, un paramètre de filtrage, p,
   - et en déterminant une valeur filtrée, $y(i,j)$, pour le point courant à partir de sa valeur caractéristique décodée, $x(i,j)$, du paramètre de filtrage, p, et de la moyenne Moy dans la fenêtre, telle que $y(i,j) = p.x(i,j) + (1-p).Moy$.

2. Procédé selon la revendication 1, caractérisé en ce que le filtrage est très important, p étant proche de 0, lorsque la moyenne est faible, les défauts même petits étant en effet très visibles dans ce cas, et au contraire le filtrage est peu important, la valeur décodée étant presque transmise telle quelle, p étant proche de 1, lorsque la moyenne est grande.

3. Procédé selon l'une des revendications 1 et 2, caractérisé en ce que le paramètre, NR, lié à l'état de fonctionnement du codeur est lié au niveau de remplissage d'une mémoire tampon qui stocke les composantes codées avant transmission, le filtrage étant peu important, voire sans effet c'est-à-dire p = 1, lorsque la mémoire tampon est faiblement remplie et augmentant lorsque la mémoire tampon s'engorge.

4. Procédé selon la revendication 3, caractérisé en ce que le paramètre de filtrage, p, varie en fonction de la moyenne dans la fenêtre de filtrage, Moy, et du paramètre NR selon la fonction suivante: $p = |1 + - (\sqrt{2}-1).(Log(NR+1).a/Moy)^b|^{-2}$ où a et b sont deux constantes de valeurs prédéfinies.

5. Procédé selon la revendication 1, caractérisé en ce que les valeurs caractéristiques associées aux points d'images sont les valeurs de luminance numérisées.

6. Dispositif de réduction du bruit engendré par un codeur-décodeur, opérant par blocs de points d'images numérisées de N lignes par M colonnes, ayant une entrée (E) reliée à la sortie du décodeur et adapté pour mettre en oeuvre le procédé selon l'une quelconque des revendications 1 à 5, caractérisé en ce que

- cette entrée (E) est reliée à l'entrée d'une mémoire de lignes (10) de capacité égale à 2M valeurs, à l'entrée d'une mémoire de colonnes (20) de capacité égale à 2(N+2) valeurs et à l'entrée d'une mémoire de bloc (30) de capacité égale à (N+2).(M+2) valeurs, cette mémoire étant également reliée aux mémoires de lignes et de colonnes,
- le dispositif comportant en outre un circuit de calcul de moyenne (40) à partir des valeurs associées aux points d'une fenêtre centrée sur le point courant de valeurs x(i,j), mises en mémoire dans la mémoire de bloc (30) et fournissant en sortie la valeur moyenne Moy des valeurs associées aux points de cette fenêtre
- un circuit de détermination (60) du paramètre de filtrage, p, couplé en entrée d'une part à la sortie du calcul de moyenne, d'autre part à une entrée du dispositif recevant les données caractéristiques (NR) de l'état de fonctionnement du codeur,
- et un circuit de filtrage (70) relié en entrée d'une part à la sortie du circuit de calcul de moyenne, d'autre part à la sortie du circuit de détermination du paramètre de filtrage, et dont la sortie fournit la suite des valeurs caractéristiques filtrées y(ij) = p.x(ij) + (1-p).Moy.

7. Dispositif selon la revendication 6, caractérisé en ce que, l'état de fonctionnement du codeur étant caractérisé par une variable d'état NR liée au niveau de remplissage d'une mémoire dans le codeur, le dispositif comporte en outre un circuit de transcodage (50) qui reçoit cette variable d'état NR et fournit des données constituant une partie de l'adresse d'une mémoire PROM formant le circuit de détermination du paramètre p, la moyenne Moy, constituant une autre partie de l'adresse.

## Claims

1. A method for reducing noise resulting from a coding-decoding of digital pictures, the method operating by blocks of picture points, characterized in that it consists in processing the characteristic value of the running point of the decoded blocks,
   - by determining, from a window centered on the running picture point, a characteristic mean value $\overline{M}$ of the values associates to the points of this window,
   - then by determining a filter parameter p from a parameter NR linked to the operation status of the coder and to this mean value $\overline{M}$,
   - and by determining a filtered value y(i,j) for the running point from its characteristic decoded value x(i,j), from the filter parameter p and from the mean value $\overline{M}$ in the window such that

   $$y(i,j) = p.x(i,j) + (1-p).\overline{M}.$$

2. A method according to claim 1, characterized in that the filtering is very important, i.e. p is close to zero, if the mean value is low, as even small faults are clearly evident in this case, and that in contrast thereto, the filtering is of low importance, the decoded value being transmitted nearly without alteration and p being close to one, if the mean value is elevated.

3. A method according to one of claims 1 and 2, characterized in that the parameter NR linked to the operation status of the coder is connected to the filling level of a buffer memory storing the coded components prior to transmission, the filtering being of reduced importance or even without any effect, which signifies p = 1, if the buffer memory is only slightly filled, whereas the filter effect increases if the buffer memory tends to saturation.

4. A method according to claim 3, characterized in that the filter parameter p varies in accordance with the mean value M in the filtering window and with the parameter NR according to the following formula $p = [1+(\sqrt{2}-1).(Log(NR+1).a/\overline{M}^b)]^{-2}$, wherein a and b are both predefined constant values.

5. A method according to claim 1, characterized in that the characteristic values associated to the picture points are digital brightness values.

6. A device for reducing the noise resulting from a coder-decoder operating by blocks of digital picture points comprising N lines and M columns, the device having an input (E) connected to the decoder output and adapted to implement the method according to any one of claims 1 to 5, characterized in that

- this input (E) is connected to the input of a line memory (10) having a capacity equal to 2M values, to the input of a column memory (20) having a capacity equal to 2(N+2) values, and to the input of a block memory (30) having a capacity equal to (N+2) (M+2) values, this memory being further connected to the line memory and the column memory,
- the device further comprising a circuit for calculating the mean value (40) from the values associated to the points of a window centered on the running point of values x(i,j), stored in the block memory (30), this circuit supplying at its output the mean value $\overline{M}$ of the values associated to the points of this window,
- a circuit (60) for determining the filter parameter p whose input is coupled on the one hand to the output of the mean value calculating circuit and on the other hand to an input of the device receiving the characteristic data (NR) of the operation status of the coder,
- and a filtering circuit (70) whose input is connected on the one hand to the output of the circuit for calculating the mean value and on the other hand to the output of the circuit for determining the filtering parameter while the output supplies the sequence of filtered characteristic values

$$y(i,j) = p.x(i,j) + (1-p).\overline{M}.$$

7. A device according to claim 6, characterized in that, the operation status of the coder being defined by a status variable NR connected to the filling level of a memory in the coder, the device further comprises a transcoding circuit (50) which receives this status variable NR and supplies data defining a portion of the address of a programmable memory PROM constituting the circuit for determining the parameter p, while the mean value $\overline{M}$ defines another portion of the address.

**Patentansprüche**

1. Verfahren zur Verringerung des durch eine die Bildpunkte blockweise verarbeitende Kodierung-Dekodierung der digitalen Bilder erzeugten Rauschens, dadurch gekennzeichnet, daß es darin besteht, den charakteristischen Wert des laufenden Punkts der dekodierten Blöcke zu verarbeiten, indem
   - ausgehend von einem Eingangsfenster, das auf den laufenden Bildpunkt zentriert ist, ein charakteristischer Mittelwert $\overline{M}$ der den Punkten dieses Fensters zugeordneten Werte bestimmt wird,
   - dann ausgehend von einem Parameter NR, der vom Betriebzustand des Kodierers und von diesem Mittelwert $\overline{M}$ abhängt, ein Filterparameter p bestimmt wird,
   - und ein gefilterter Wert y(i,j) für den laufenden Bildpunkt abhängig von seinem dekodierten charakeristischen Wert x(i,j), vom Filterparameter p und vom Fenstermittelwert $\overline{M}$ bestimmt wird, derart, daß gilt:

$$y(i,j) = p.x(i,j) + (1-p).\overline{M}.$$

2. Verfahren nach Anspruch 1, dadurch gekennzeichnet, daß eine starke Filterung erfolgt, wobei p nahe 0 ist, wenn der Mittelwert niedrig ist, da selbst kleine Fehler in diesem Fall deutlich sichtbar sind, wogegen eine nur schwache Filterung erfolgt und der dekodierte Wert fast unverändert übertragen wird, wobei p nahe 1 liegt, wenn der Mittelwert groß ist.

3. Verfahren nach einem der Ansprüche 1 und 2, dadurch gekennzeichnet, daß der Parameter NR, der vom Betriebszustand des Kodierers abhängt, mit dem Füllgrad eines Pufferspeichers verknüpft ist, der die kodierten Komponenten vor der Übertragung speichert, wobei nur eine schwache oder gar unwirksame Filterung erfolgt, d.h. p = 1, wenn der Pufferspeicher nur gering gefüllt ist, während die Filterwirkung zunimmt, wenn dem Pufferspeicher Überfüllung droht.

4. Verfahren nach Anspruch 3, dadurch gekennzeichnet, daß der Filterparameter p abhängig vom Mittelwert im Filterfenster M und vom Parameter NR gemäß folgender Formel variiert:
   $p = [1+( \sqrt{2}-1).(\mathrm{Log}(NR+1).a/\overline{M}^b)]^{-2}$, wobei a und b vorbestimmte Konstanten bilden.

5. Verfahren nach Anspruch 1, dadurch gekennzeichnet, daß die den Bildpunkten zugeordneten charakteristischen Werte die digitalisierten Helligkweitswerte sind.

8

6. Vorrichtung zur Reduzierung des von einem die digitalen Bildpunkte von N Zeilen und M Spalten blockweise verarbeitenden Kodierer-Dekodierer erzeugten Rauschens, wobei die Vorrichtung einen Eingang (E) aufweist, der an den Ausgang des Dekodierers angeschlossen ist, und die Vorrichtung zur Durchführung des Verfahrens nach einem beliebigen der Ansprüche 1 bis 5 bestimmt ist, dadurch gekennzeichnet, daß

- dieser Eingang (E) an den Eingang eines Zeilenspeichers (10) einer Kapazität von 2N Werten, an den Eingang eines Spaltenspeichers (20) einer Kapazität von 2(N + 2) Werten und an den Eingang eines Blockspeichers (30) einer Kapazität von (N + 2) (M + 2) Werten angeschlossen ist, der seinerseits ebenfalls mit dem Zeilenspeicher und dem Spaltenspeicher verbunden ist,
- die Vorrichtung weiter einen Rechenkreis (40) zur Berechnung des Mittelwerts ausgehend von den Werten der einem auf den laufenden Punkt mit den Werten x(i,j) zentrierten Fensters zugeordneten Werte, die in dem Blockspeicher (30) abgespeichert sind, wobei dieser Rechenkreis am Ausgang den Mittelwert $\overline{M}$ der den Punkten dieses Fensters zugeordneten Werte liefert,
- einen Schaltkreis (60) zur Bestimmung des Filterparameters p, der eingangsseitig einerseits an den Ausgang des Mittelwert-Rechenkreises und andererseits an einen Eingang der Vorrichtung angeschlossen ist, an dem die charakteristischen Daten (NR) des Betriebszustands des Kodierers anliegen,
- und einen Filterkreis (70) aufweist, der eingangsseitig einerseits an den Ausgang des Mittelwert-Rechenkreises und andererseits an den Ausgang des Kreises zur Bestimmung des Filterparameters angeschlossen ist und dessen Ausgang die Folge charakteristischer gefilterter Werte gemäß folgender Formel liefert:

$$y(i,j) \;=\; p.x(i,j) \;+\; (1\text{-}p).\overline{M}.$$

7. Vorrichtung nach Anspruch 6, dadurch gekennzeichnet, daß für den Fall, daß der Betriebszustand des Kodierers durch eine Zustandsvariable NR charakterisiert ist, die vom Füllungsgrad eines Speichers im Kodierer abhängt, die Vorrichtung außerdem einen Transkodierkreis (50) enthält, der diese Zustandsvariable NR empfängt und Daten liefert, die einen Teil der Adresse eines programmierbaren Speichers bilden, welcher den Kreis zur Bestimmung des Parameters d darstellt, wobei der Mittelwert $\overline{M}$ den anderen Teil der Adresse bildet.

# FIG_1

# FIG_2

SENS DE BALAYAGE
(Bandes paires)

FIG_3

N LIGNES

M COLONNES

SENS DE BALAYAGE
(Bandes impaires)

FIG_4

# FIG_5

# FIG_6

E: ECRITURE DANS LA ZONE MÉMOIRE

L: L LECTURE DE LA ZONE MÉMOIRE